# EUROPÄISCHE PATENTANMELDUNG

(11) **EP 3 431 178 A1**
(43) Veröffentlichungstag der Anmeldung: **23.01.2019**
(21) Anmeldenummer: 17182294.3
(22) Anmeldetag: 20.07.2017
(51) Int. Cl.: B01J 35/02, B01J 27/055, B01J 19/30, C01B 17/79, B01J 23/22, B01J 35/00, B01J 35/10

(54) **KATALYSATOREN UND VERFAHREN FÜR DIE KATALYTISCHE OXIDATION VON SO2 ZU SO3**

(71) Anmelder: BASF SE, 67056 Ludwigshafen am Rhein (DE)
(72) Erfinder: Die Erfindernennung liegt noch nicht vor
(74) Vertreter: BASF IP Association

(57) **Zusammenfassung**

Die Erfindung betrifft Katalysatoren und Verfahren für die Oxidation von SO₂ zu SO₃ sowie Verfahren zur Herstellung und Verwendung der Katalysatoren in Verfahren zur Oxidation von SO₂ zu SO₃, insbesondere als Staubschutzschicht.
Die Katalysatoren enthalten Vanadium, mindestens ein Alkalimetall und Sulfat auf einem Siliziumdioxid-Trägermaterial. Sie haben eine ringförmige Form mit mindestes drei Auswölbungen, einen Auß endurchmesser von mindestens 26 mm, eine Länge im Bereich von 5 und 60 mm und ein Innenloch mit einem Durchmesser im Bereich von 8 bis 20 mm.

## Beschreibung

Die Erfindung betrifft Katalysatoren und Verfahren für die Oxidation von SO₂ zu SO₃ sowie Verfahren zur Herstellung und Verwendung der Katalysatoren in Verfahren zur Oxidation von SO₂ zu SO₃.

Schwefelsäure wird heute praktisch ausschließlich über die Oxidation von Schwefeldioxid (SO₂) zu Schwefeltrioxid (SO₃) im so genannten Kontakt-/Doppelkontaktverfahren mit anschließender Hydrolyse gewonnen. Bei diesem Prozess wird SO₂ mit molekularem Sauerstoff an Vanadium enthaltenden Katalysatoren in mehreren hintereinanderliegenden adiabaten Schichten (Horden) zu SO₃ oxidiert. Der SO₂-Gehalt des Eduktgases liegt üblicherweise zwischen 0,01 und 50 Vol.-% und das Verhältnis von O₂/SO₂ zwischen 0,5 und 5. Eine bevorzugte Sauerstoffquelle ist Luft. Ein Teil des Schwefeldioxids wird in den einzelnen Horden umgesetzt, wobei das Gas jeweils zwischen den einzelnen Horden abgekühlt wird (Kontaktverfahren). Bereits gebildetes SO₃ kann durch Zwischenabsorption aus dem Gasstrom entfernt werden, um höhere Gesamtumsätze zu erzielen (Doppelkontaktverfahren). Die Umsetzung erfolgt je nach Horde in einem Temperaturbereich zwischen 340°C bis 680°C, wobei die maximale Temperatur aufgrund des sinkenden SO₂-Gehaltes mit zunehmender Hordennummer abnimmt.

Heutige kommerzielle Katalysatoren enthalten üblicherweise neben Vanadium auch Alkalimetallverbindungen, vor allem Kaliumverbindungen aber gegebenenfalls auch Natriumverbindungen und/oder Cäsiumverbindungen, sowie Sulfat. Als Träger für die zuvor erwähnten Komponenten werden üblicherweise poröse Oxide verwendet, wie insbesondere Siliziumdioxid, SiO₂. Unter Reaktionsbedingungen bildet sich auf dem Trägermaterial eine Alkalipyrosulfatschmelze aus, in welcher die Aktivkomponente Vanadium in Form von Oxosulfat-Komplexen gelöst wird (Catal. Rev. - Sci. Eng., 1978, Bd. 17(2), Seiten 203 bis 272). Man spricht von einem "supported liquid phase catalyst".

Die Gehalte an Vanadium, berechnet als V₂O₅ liegen meist zwischen 3 und 10 Gew.-%, die Gehalte an Alkalimetallen (M), berechnet als M₂O, bei 5 bis 30 Gew.-%, wobei das molare Verhältnis von Alkalimetall zu Vanadium (M/V Verhältnis) üblicherweise zwischen 2 und 6 liegt. Der Gehalt an Kalium, berechnet als K₂O, liegt üblicherweise zwischen 6 und 15 Gew.-% und an Sulfat zwischen 12 und 30 Gew.-%. Daneben wurde über die Verwendung zahlreicher weiterer zusätzlicher Elemente berichtet, wie beispielsweise Chrom, Eisen, Aluminium, Phosphor, Mangan und Bor. Als poröses Trägermaterial wird überwiegend SiO₂ eingesetzt.

Die Herstellung derartiger Katalysatoren im industriellen Maßstab erfolgt üblicherweise durch Vermischen wässriger Lösungen bzw. Suspensionen der verschiedenen Aktivkomponenten, beispielsweise entsprechender Vanadiumverbindungen (V₂O₅ Ammoniumpolyvanadat, Ammoniummetavanadat" Alkalimetallvanadate bzw. Vanadylsulfate) mit Alkalimetallsalzen (Nitraten, Carbonaten, Oxiden, Hydroxiden, Sulfaten), unter Umständen mit Schwefelsäure und sonstigen Komponenten, welche als Porenbildner bzw. Schmiermittel fungieren können, wie beispielsweise Schwefel, Stärke oder Grafit, mit dem Trägermaterial. Die daraus resultierende Masse wird im nächsten Schritt zu den gewünschten Formkörpern verarbeitet und schließlich thermisch behandelt (Trocknung und Kalzinierung).

US 4,485,190 beschreibt die Herstellung eines Katalysators für die Oxidation von SO₂ zu SO₃ enthaltend Vanadium, Kalium und eine Siliziumoxid-Verbindung. Als Formkörper werden in Spalte 2, Zeilen 30 ff. und Spalte 5, Zeilen 62 ff. unter anderem Trilobe genannt. In Spalte 6, Zeilen 5 ff. wird gesagt, dass Trilobe eine um 18 % größere Oberfläche haben, ohne dass weitere Angaben zur Größe der miteinander verglichenen Formkörper gemacht werden. Die Form der erwähnten Trilobe wird nicht näher angegeben. Trilobe mit Durchgängen werden nicht erwähnt. In den Ausführungsbeispielen werden keine Trilobe hergestellt.

DE 689 19 235 T2 beschreibt einen Katalysator zur Oxidation von SO₂ zu SO₃ enthaltend Vanadium, Kalium und eine Siliziumoxid-Verbindung. Als Formkörper werden auf Seite 2, Zeilen 2 ff. hohle oder kompakte Zylinder, mehrfach gelappte Zylinder, gegebenenfalls mit spiralförmigen Vertiefungen, vorgeschlagen. Andere Formen werden nicht beschrieben.

EP 464 633 A1 beschreibt einen Träger für einen Katalysator für die Herstellung von ungesättigten Estern. Als mögliche Träger sind in den Abbildungen 4 und 5 Trilobe mit drei Durchgängen und in den Abbildungen 6 und 7 Formkörper mit mehr als drei Durchgängen offenbart. In den Ausführungsbeispielen werden nur Formkörper mit einer Bohrung beschrieben.

DE 692 20 225 T2 beschreibt Katalysatoren in Form von Triloben mit 3 Durchgängen, insbesondere für die Herstellung von Formaldehyd. Die Katalysatoren werden in den Beispielen durch Tablettierung gewonnen und haben eine definierte Länge. Als vorteilhafte Eigenschaften werden eine hohe tatsächliche Oberfläche pro Volumen und ein geringer Druckverlust genannt.

DE 696 35 919 T2 beschreibt Katalysatoren in Form von Triloben mit Durchgängen, insbesondere für die Herstellung von Formaldehyd, die durch Extrusion oder Tablettierung hergestellt werden können. In den Ausführungsbeispielen werden die Katalysatoren durch Tablettierung hergestellt und weisen eine definierte Länge auf.

US 2009/0306410 A1 beschreibt Katalysatoren in Form von Triloben mit 3 Durchgängen, insbesondere für die Herstellung von Maleinsäureanhydrid. Die Katalysatoren werden in den Beispielen durch Tablettierung gewonnen und haben eine definierte Länge. Als vorteilhafte Eigenschaften werden eine hohe tatsächliche Oberfläche pro Volumen und ein geringer Druckverlust genannt.

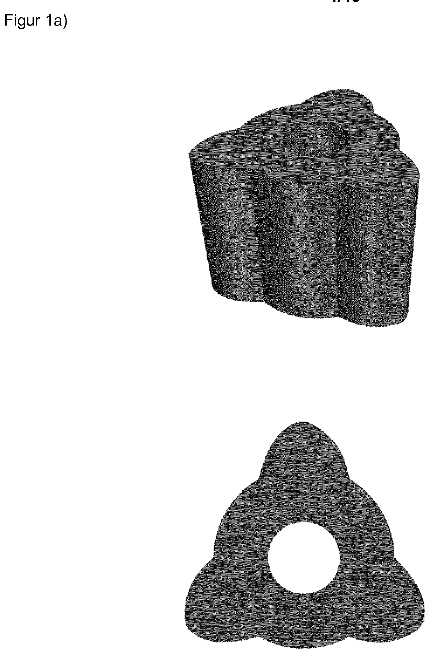

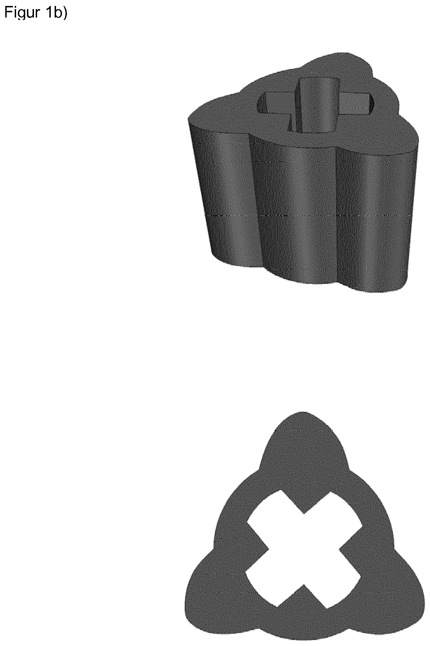

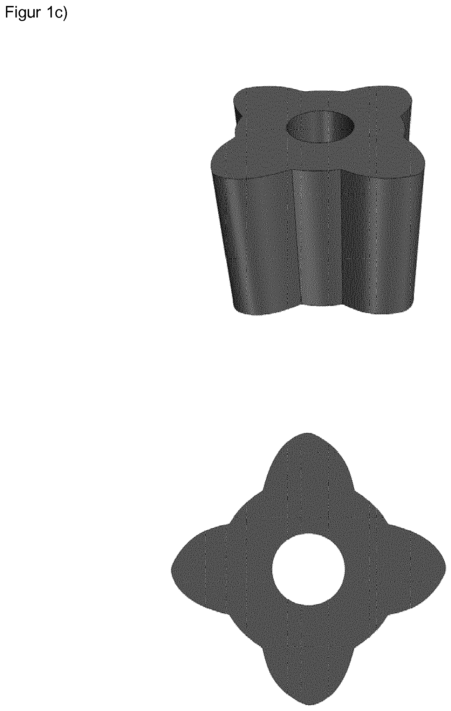

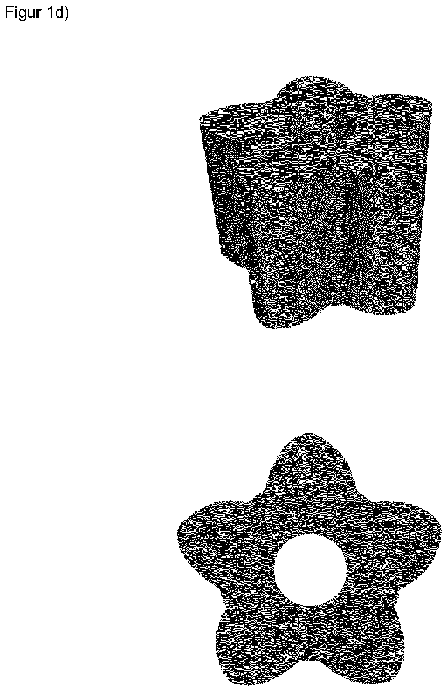

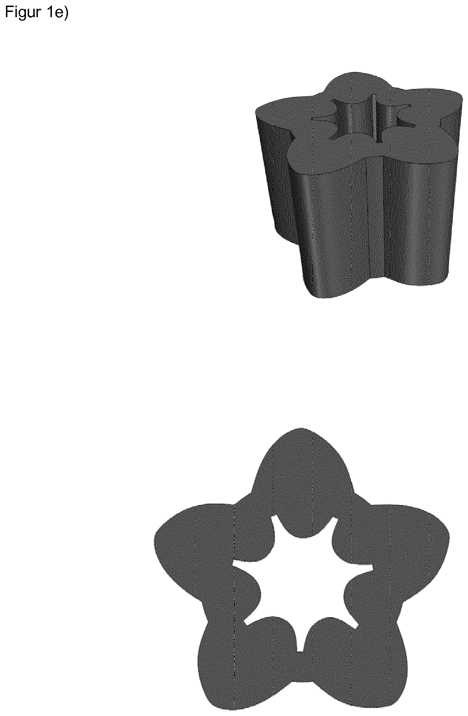

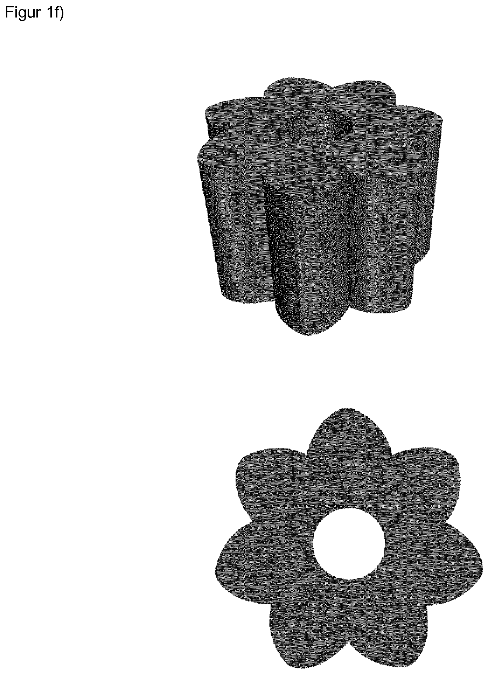

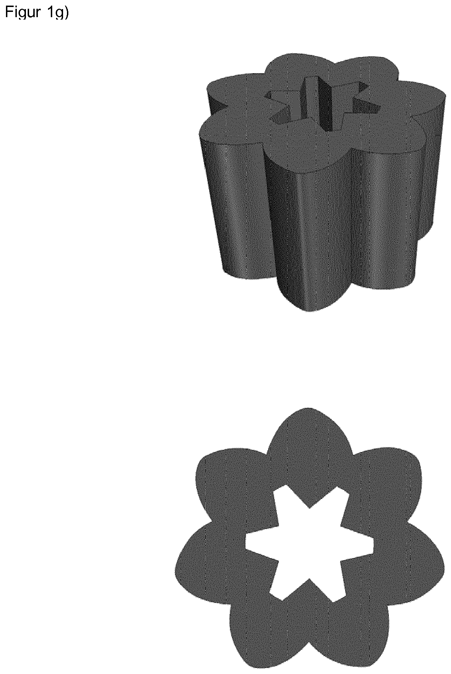

EP 417 722 A1 beschreibt Katalysatoren zur Herstellung von ungesättigten Aldehyden. Als Beispiele werden in Figur 1 Formkörper mit 3 bzw. 4 Durchgängen gezeigt. In Beispiel 4 werden Formkörper mit 3 Durchgängen durch Extrusion erhalten und bei einer Länge von 5 mm abgeschnitten. Für die Formkörper werden eine geometrische Oberfläche pro Volumen sowie der Druckverlust angegeben.

Beim Kontaktverfahren kann die Staubbelastung der Einsatzgasströme zu Problemen führen. Der eingetragene Staub kann sich beim Auftreffen auf die Katalysatorschüttung absetzen, was zu Verblockungen und Druckanstieg führen kann. Ein solcher Druckanstieg kann die Kompressionskosten für den Betrieb erhöhen oder sogar ein Abfahren der Anlage mit Austausch der betroffenen Katalysatorbettbereiche erforderlich machen.

Eine Diskussion solcher allgemein auch als "Fouling" bezeichneter Prozesse findet sich in Applied Sciences (1988), 145, Seiten 351 bis 367. Dort finden sich auch Beispiele, die den Einfluss unterschiedlicher Katalysatorgeometrien im Eingangsbereich des ersten Katalysatorbettes auf die Ablagerung/Rückhaltung von Staub in diesem Bettbereich und die Entwicklung des Druckverlusts illustrieren. Es wurden Zylinder und Ringe mit einem Durchmesser von 20 mm verglichen.

In der EP 1 114 669 wird ein Verfahren zum Umgang mit Staub enthaltenden Einsatzgasströmen beschrieben, welches ein zeitweises Umgehen bestimmter Partikel-Betten erfordert. Ein solches Verfahren erfordert aufwendige apparative Vorrichtungen oder Änderungen, die nicht regelmäßig gegeben sind.

In Procedia Engineering (2016), 138, Seiten 199 bis 205 wird die Verwendung von Katalysatoren mit einer als "hexa-lobed ring shape" bezeichneten Form als besonders vorteilhaft für den Betrieb mit staubhaltigen Einsatzgasströmen bezeichnet. Aus den angeführten Abbildungen sind allerdings keine Abmessungen dieser Formkörper zu entnehmen. Auch werden die besonderen Merkmale solcher "hexa-lobed rings" nicht näher definiert.

In dem Gebrauchsmuster CN 202366710 U werden Schwefelsäure-Katalysatoren in Form zahnradartige Hohlstränge beschrieben, die einen Innenlochdurchmesser von 3,5 bis 5 mm, einen Außendurchmesser 10 bis 11 mm und eine Länge von 9 bis 30 mm aufweisen.

In der CN 105126861 A wird die Herstellung von Schwefelsäure-Katalysatoren in Form von Zylindern, Ringzylindern oder zahnradartigen Ringzylindern beschrieben. Die maximalen Abmessungen betragen 12 mm Durchmesser bei einer Länge von 10 bis 20 mm.

In der JP 8187430 werden zylindrische Schwefelsäurekatalysatoren ohne oder mit bis zu 5 Bohrungen parallel zur Zylinderachse beschrieben. Als entscheidend für eine gute Performance werden bestimmte Bereiche für die Verhältnisse von Höhe zu Durchmesser (0,9 bis 1,5 mm) bzw. geometrischer Oberfläche zu Durchmesser (110 bis 440 mm) definiert.

In der WO 16156042 A1 werden Schwefelsäure-Katalysatoren mit einer "kleeblattartigen" Geometrie beschrieben.

In einer Produktbroschüre der Fa. Haldor Topsoe mit dem Titel "New and Improved Dust Protection Layer" aus dem Jahr 2007 werden Katalysatoren mit einer fünfblättrigen Blumenform gezeigt, welche einen Außendurchmesser von 25 mm und ein Innenloch mit einem Durchmesser von ungefähr 7 mm aufweisen.

Eine Aufgabe der Erfindung ist die Bereitstellung von Katalysatoren für die Oxidation von SO₂ zu SO₃, welche sich besonders für den Einsatz als Staubschutzschicht im Eingangsbereich des ersten Katalysatorbettes eignen.

Gelöst wird die Aufgabe durch einen Katalysator für die Oxidation von SO₂ zu SO₃, enthaltend Vanadium, mindestens ein Alkalimetall und Sulfat auf einem Siliziumdioxid-Trägermaterial, welcher eine ringförmige oder zylindrische Form mit mindestens drei Auswölbungen, einen Außendurchmesser von mindestens 26 mm, eine Länge im Bereich von 5 und 60 mm und ein Innenloch mit einem Durchmesser im Bereich von 8 bis 20 mm hat.

Beispiele für erfindungsgemäße zylindrische Katalysatorformkörper sind in Abbildung 1 gezeigt:
1a) mit 3 Auswölbungen und rundem Loch;
1b) mit 3 Auswölbungen und Kreuzloch;
1c) mit 4 Auswölbungen und rundem Loch;
1d) mit 5 Auswölbungen und rundem Loch;
1e) mit 5 Auswölbungen und 7-Sternloch;
1f) mit 7 Auswölbungen und rundem Loch;
1g) mit 7 Auswölbungen und 6-Sternloch.

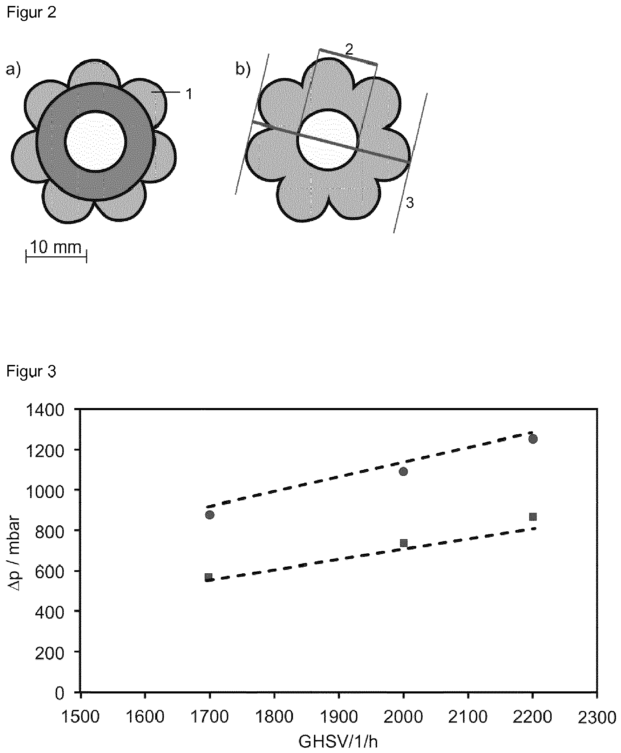

Abbildung 2 zeigt schematisch ein Beispiel für a) die Bestimmung des Gewichtsanteils der Auswölbungen (1) am Gesamtgewicht des Katalysators und b) die Bestimmung des äußeren Durchmessers (3) und des Lochdurchmessers (2). Bei nicht rundem Loch entspricht der Durchmesser der größten freien Strecke im Zentrum des Katalysators.

In einer bevorzugten Ausführungsform der Erfindung hat der Katalysator eine zylindrische Form mit mindestens 6 und höchsten 15 Auswölbungen. In einer besonders bevorzugten Ausführungsform der Erfindung hat der Katalysator eine zylindrische Form mit 7 Auswölbungen.

In einer weiteren bevorzugten Ausführungsform der Erfindung habt der Katalysator einen Außendurchmesser im Bereich von 26 bis 70 mm, besonders bevorzugt im Bereich von 30 bis 50 mm.

In einer weiteren bevorzugten Ausführungsform der Erfindung haben die Auswölbungen einen Masseanteil am Gesamtkatalysator im Bereich von 1 bis 80 %, besonders bevorzugt im Bereich von 45 bis 55 % (vgl. Abbildung 2a).

In einer weiteren bevorzugten Ausführungsform der Erfindung liegt das Verhältnis des Lochdurchmessers zum Außendurchmesser des Katalysators im Bereich von 0,3 und 0,8, besonders bevorzugt im Bereich von 0,4 bis 0,5 (vgl. Abbildung 2b).

Die Herstellung der erfindungsgemäßen Katalysatoren kann durch verschiedene formgebende Verfahren erfolgen, beispielsweise Tablettierung, Extrusion oder auch additive Fertigungsverfahren. Bevorzugt werden die erfindungsgemäßen Katalysatoren durch Extrusion einer entsprechenden Katalysatorvorläufermasse, umfassend Vanadium, mindestens ein Alkalimetall und Sulfat auf einem Siliziumdioxid-Trägermaterial, durch ein Extrusionswerkzeug hergestellt, welches die Geometrie des Formkörper-Querschnitts abbildet.

Gegenstand der Erfindung ist somit auch ein Verfahren zur Herstellung von Katalysatoren wie oben beschrieben durch Extrusion einer entsprechenden Katalysatorvorläufermasse, umfassend Vanadium, mindestens ein Alkalimetall und Sulfat auf einem Siliziumdioxid-Trägermaterial, durch ein Extrusionswerkzeug, welches die Geometrie des Formkörper-Querschnitts abbildet.

Die Idealform der erfindungsgemäßen Katalysatoren wird durch die Geometrie des Extrusionswerkzeugs, durch das die Katalysatorvorläufermasse extrudiert wird, definiert. Selbstverständlich weicht die Geometrie realer extrudierter Katalysatoren von dieser Idealform ab, wobei die realen Katalysatoren jedoch im Wesentlichen die oben beschriebenen geometrischen Merkmale aufweisen. Im Allgemeinen verlaufen die Achsen der Auswölbungen parallel. Die realen Katalysatoren können jedoch beispielsweise in z-Richtung leicht gekrümmt sein. Die Löcher (Durchgänge) der erfindungsgemäßen Katalysatoren können von einer perfekten Kreisform abweichen und beispielsweise auch oval oder sternförmig sein. Liegt eine große Zahl realer KatalysatorFormkörper vor, so können bei einigen Formkörpern einzelne Durchgänge verschlossen sein. Im Allgemeinen ist die Stirnfläche der Katalysatoren in der xy-Ebene, bedingt durch den Produktionsprozess, keine glatte Fläche, sondern mehr oder weniger unregelmäßig. Die Länge der Katalysatoren in z-Richtung (maximale Ausdehnung in z-Richtung) ist im Allgemeinen nicht für alle Formkörper gleich, sondern weist eine Verteilung auf, die durch eine Durchschnittslänge z (arithmetischer Mittelwert) gekennzeichnet ist.

Im Allgemeinen enthalten die Katalysatoren neben Vanadium auch Alkalimetallverbindungen, vor allem Kaliumverbindungen aber gegebenenfalls auch Natriumverbindungen und/oder Cäsiumverbindungen, sowie Sulfat. Als Träger für die zuvor erwähnten Komponenten werden poröse Oxide verwendet wie Siliziumdioxid, SiO₂.

Als inerte Trägermaterialien werden vor allem poröse Materialien auf der Basis von SiO₂ eingesetzt. Dabei können synthetische Varianten von SiO₂ als auch natürliche Formen von SiO₂ oder deren Mischungen eingesetzt werden.

Der Gehalt an Vanadium, berechnet als V₂O₅, beträgt im Allgemeinen 3 bis 10 Gew.-%, der Gehalt an Alkalimetallen (M), berechnet als M₂O, 5 bis 30 Gew.-%, wobei das molare Verhältnis von Alkalimetall zu Vanadium (M/V Verhältnis) üblicherweise zwischen 2 und 6 liegt. Der Gehalt an Kalium, berechnet als K₂O, liegt üblicherweise zwischen 6 und 15 Gew.-% und der Gehalt an Sulfat zwischen 12 und 30 Gew.-%. Daneben können weitere Elemente enthalten sein, wie beispielsweise Chrom, Eisen, Aluminium, Phosphor, Mangan und Bor.

Ein bevorzugtes Trägermaterial enthält natürlich vorkommende Diatomeenerde. Besonders bevorzugt enthält das Trägermaterial mindestens zwei verschiedene natürlich vorkommende, nicht kalzinierte Diatomeenerden, welche sich im Strukturtyp der ihnen zugrundeliegenden Kieselalgen unterscheiden, wobei die verschiedenen Strukturtypen ausgewählt sind aus tellerförmigen, zylinderförmigen und stäbchenförmigen Strukturtypen.

Die daraus hergestellten Katalysatoren verfügen über eine besonders gute mechanische Stabilität.

Bevorzugte Diatomeenerden sollten einen Gehalt an Aluminiumoxid Al₂O₃ von kleiner als 5 Gew.-%, bevorzugt kleiner als 2,6 Gew.-% und insbesondere kleiner als 2,2 Gew.-% aufweisen. Ihr Gehalt an Eisen(III)oxid Fe₂O₃ sollte kleiner als 2 Gew.-% sein, bevorzugt kleiner als 1,5 Gew.-% und insbesondere kleiner als 1,2 Gew.-% sein. Ihr Gehalt an der Summe von Erdalkalimetalloxiden (Magnesiumoxid MgO + Kalziumoxid CaO) sollte kleiner als 1,8 Gew.-%, bevorzugt kleiner als 1,4 Gew.-% und insbesondere kleiner als 1,0 Gew.-% sein.

Nicht kalzinierte Diatomeenerde ist vor dem Vermischen mit den Aktivkomponenten nicht bei Temperaturen oberhalb von 500°C, bevorzugt nicht oberhalb von 400°C und insbesondere nicht oberhalb von 320°C behandelt worden. Charakteristisches Merkmal der nicht kalzinierten Diatomeenerde ist, dass das Material im Wesentlichen amorph ist, d.h. der Gehalt an Cristobalit bei < 5 Gew.-%, bevorzugt < 2 Gew.-% und besonders bevorzugt < 1 Gew.-% liegt, bestimmt mittels Röntgenbeugungsanalyse.

Selbstverständlich kann die natürlich vorkommende, nicht kalzinierte Diatomeenerde abgesehen von der Kalzination nach dem Abbau und vor der Verwendung als Trägermaterial unterschiedlichen Aufarbeitungsschritten unterworfen worden sein, beispielsweise Schlämmen, Waschen, Extraktion, Trocknen und/oder Sichten.

Der mittlere volumenbezogene Porendurchmesser, bestimmt mittels Quecksilberporosimetrie, der verschiedenen verwendbaren Diatomeenerden sollte zwischen 0,1 µm und 10 µm, bevorzugt zwischen 0,5 µm und 9 µm und insbesondere zwischen 0,7 µm und 7 µm liegen. Der mittlere volumenbezogene Porendurchmesser der Mischungen von nicht kalzinierten Diatomeenerden sollte zwischen 0,5 µm und 9 µm, bevorzugt zwischen 0,8 und 7 µm und insbesondere zwischen 0,9 und 5 µm liegen. Dabei kann die Form der Porengrößenverteilung der erfindungsgemäßen Mischungen deutlich von der der einzelnen Diatomeenerde abweichen. Bimodale Porengrößenverteilungen oder Porengrößenverteilungen mit ausgeprägten Schultern können je nach Kombination der unterschiedlichen Diatomeenerden resultieren. Die Einstellung eines bestimmten mittleren volumenbezogenen Porendurchmessers innerhalb der oben beschriebenen Grenzen durch Mischen unterschiedlicher Diatomeenerden in verschiedenen Verhältnissen ist prinzipiell möglich.

Die Herstellung der Katalysatoren erfolgt durch Vermischen von wässrigen Lösungen oder von Suspensionen der verschiedenen Aktivkomponenten, beispielsweise entsprechender Vanadiumverbindungen (V₂O₅ Ammoniumpolyvanadat, Ammoniummetavanadat, Alkalimetallvanadate bzw. Vanadylsulfate) mit Alkalimetallsalzen (Nitraten, Carbonaten, Oxiden, Hydroxiden, Sulfaten), gegebenenfalls mit Schwefelsäure und sonstigen Komponenten, welche als Porenbildner bzw. Schmiermittel fungieren können wie beispielsweise Schwefel, Stärke oder Graphit, mit dem Trägermaterial. Der Mischvorgang ist nicht weiter eingeschränkt und kann beispielsweise in einem Kneter, einem Schneckenmischer, einem Schaufelmischer oder einem sogenannten Muller-Mischer ("Mix Muller"), in dem die Komponenten durch rotierende Räder und Schaber vermischt werden, erfolgen.

Die daraus resultierende Masse wird im nächsten Schritt zu den erfindungsgemäßen Katalysator-Formkörpern extrudiert, getrocknet und kalziniert. Die Art des Extruders ist hierbei nicht weiter eingeschränkt. Es können beispielsweise Kolbenextruder, Schneckenextruder, Kaskadenextruder oder Planetwalzenextruder eingesetzt werden. Bevorzugt ist die Verwendung von Schneckenextrudern, insbesondere von Schneckenextrudern mit einer oder zwei Schneckenwellen. Die Schneckenwellen können hinsichtlich ihrer Geometrie, beispielsweise hinsichtlich ihres Nenndurchmessers, der Gangtiefe und/oder der Steigung, dahingehend optimiert werden, dass sie möglichst gleichmäßige Extrudate erzeugen. Das Material der Schneckenwelle oder ihrer Oberfläche, wie auch das Material des Schneckenzylinders oder seiner Oberfläche und des Extrusionswerkzeugs oder seiner Oberfläche kann beispielsweise dahingehend optimiert werden, dass es eine möglichst große Beständigkeit gegenüber der zu extrudierenden Masse aufweist. Auf Grund des niedrigen pH-Wertes der Masse sind insbesondere korrosions- und säurebeständige Materialien bevorzugt. Die zu verarbeitenden Materialien können der Schnecke kontinuierlich oder diskontinuierlich über einen Trichter von oben zugeführt werden. Eine reproduzierbare Dosierung und Füllhöhe im Trichter kann zu verbesserter Qualität der Extrusion führen.

Die Art der Extrusion ist ebenfalls nicht weiter eingeschränkt. Beispielsweise kann eine Kalt-, Warm- oder Heißextrusion verwendet werden. Die zu extrudierende Masse hat beim Eingang in den Extruder typischerweise eine Temperatur von 10 bis 90 °C. Das Extrudergehäuse mit dem Schneckenzylinder kann mit einem Kühlmedium, beispielsweise Wasser, gekühlt werden, um zu verhindern, dass Bauteile durch zu hohe Temperaturen deformiert werden. In einem solchen Fall beträgt die Temperatur des Kühlmediums im Vorlauf typischerweise 0 bis 80 °C. Die Temperatur des Extrudats direkt nach Verlassen des Extruders beträgt typischerweise 10 bis 90°C. Die Schneckendrehzahl beträgt typischerweise 1 bis 100 Umdrehungen pro Minute, oft 2 bis 30 Umdrehungen pro Minute. Der Druck im Extruder vor dem Extrusionswerkzeug beträgt typischerweise 20 bis 500 bar. Das Drehmoment, welches die Schnecke überträgt, beträgt typischerweise 50 bis 5000 Nm.

Extrusionswerkzeuge können aus einem oder mehreren Bauteilen bestehen. Besteht das Extrusionswerkzeug aus mehreren Bauteilen, so können die Bauteile aus dem gleichen oder aus unterschiedlichen Materialien bestehen. In einer bevorzugten Ausführungsform besteht die Matrize aus einem möglichst säurebeständigen Kunststoff, beispielsweise PTFE und die Einsatzstifte aus einem säurebeständigen Edelstahl. Die Matrizen können kostengünstig beispielsweise durch Spritzguss hergestellt werden.

Die Längenverteilung kann durch "Naturbruch" oder gezieltes Ablängen realisiert werden.
Die Katalysatoren-Formkörper werden nach der Extrusion im Allgemeinen einem Trocknungsschritt unterzogen. Hierbei ist die Art des Ofens nicht weiter eingeschränkt. Es können beispielsweise stationäre Umluftöfen, Drehrohröfen oder Bandöfen eingesetzt werden. Die Dauer der Trocknung beträgt im Allgemeinen 0,5 bis 20 Stunden und die Temperatur beträgt im Allgemeinen 50 bis 200 °C.

Die Formkörper werden nach der Trocknung im Allgemeinen einem Kalzinierschritt unterzogen. Hierbei ist die Art des Ofens nicht weiter eingeschränkt. Es können beispielsweise stationäre Umluftöfen, Drehrohröfen oder Bandöfen eingesetzt werden. Die Dauer der Trocknung beträgt im Allgemeinen 0,5 bis 20 Stunden und die Temperatur beträgt im Allgemeinen 200 bis 800 °C.

Es kann nach der Kalzination oder bereits zu anderen Zeitpunkten im Herstellverfahren des Katalysators vorteilhaft sein, die Formkörper bezüglich Ihrer Dimensionen zu sortieren und nur eine geeignete Größenfraktion zu nutzen. Eine solche Sortierung kann beispielsweise über geeignete Siebe erfolgen. Formkörper, die größer oder kleiner als die gewünschte Dimension sind, können beispielsweise an geeigneten Stellen dem Prozess als Rückgut zurückgeführt werden. Es kann vorteilhaft sein, dieses Rückgut vor der Rückführung einer oder mehreren weiteren Verfahrensstufen zu unterziehen, beispielsweise einer Mahlung.

Gegenstand der vorliegenden Erfindung ist auch die Verwendung der oben beschriebenen Katalysatoren zur Oxidation von SO₂ zu SO₃. In einer bevorzugten ausführungsform der Erfindung werden die oben beschriebenen Katalysatoren als erste Katalysatorlage in der ersten Horde des Reaktors als Staubschutzschicht verwendet. Die empfohlene Höhe dieser Staubschutzschicht liegt im Bereich von 5 bis 20 cm.

Gegenstand der vorliegenden Erfindung ist weiterhin ein Verfahren zur Oxidation von SO₂ zu SO₃, bei dem ein Sauerstoff und Schwefeldioxid enthaltendes Gasgemisch bei einer Temperatur im Bereich von 340 bis 680 °C mit einer Schüttung aus den erfindungsgemäßen Katalysatoren in Kontakt gebracht wird.

Als Reaktoren werden typischerweise Hordenreaktoren eingesetzt (siehe beispielsweise "H. Müller, Sulfuric Acid and Sulfur Trioxide in Ullmann'a Encyclopedia of Industrial Chemistry, Wiley-VCH, 2012"; DOI: 10.1002/14356007.a25_635). In diesen Hordenreaktoren befinden sich mehrere Reaktionshorden, in denen SO₂ mit Katalysatorformkörpern in Kontakt gebracht wird. Typischerweise enthält der Reaktor zwischen 1 und 6, zumeist zwischen 3 und 5 Horden. Die Hordenreaktoren verhalten sich im Allgemeinen näherungsweise adiabat, das heißt, dass die bei der Oxidation von SO₂ zu SO₃ freiwerdende Wärme zu einem großen Teil das Reaktionsgas erhitzt. Die exotherme Oxidation von SO₂ zu SO₃ wird durch das thermodynamische Gleichgewicht limitiert, welches sich mit zunehmender Temperatur in Richtung der Edukte verschiebt. Nach dem Durchgang durch eine Horde wird daher das Reaktionsgas, beispielsweise in geeigneten Wärmetauschern, abgekühlt, bevor es der nächsten Horde zugeführt wird. Weiterhin gibt es Prozesse, in denen zwischen zwei Horden das gebildete SO₃, beispielsweise durch Absorption in konzentrierter Schwefelsäure, weitgehend aus dem Reaktionsgas entfernt wird, um den Umsatz von verbleibendem SO₂ in den nachfolgenden Horden zu erhöhen.

Die Konzentration an SO₂ im Reaktionsgas vor Eintritt in die erste Horde beträgt im Allgemeinen 2 bis 20 Vol.-%, je nach SO₂-Quelle beträgt sie typischerweise zwischen 5 und 15 Vol.-%. Die Konzentration an O₂ im Reaktionsgas vor Eintritt in die erste Horde beträgt ebenfalls im Allgemeinen zwischen 2 - 20 Vol.-%, je nach SO₂-Quelle liegt sie typischer Weise zwischen 5 und 15 Vol.-%. Die Volumenströme betragen im Allgemeinen 10 000 bis 500 000 Nm³/h, typischer Weise 30 000 bis 350 000 Nm³/h. Die Durchmesser der Reaktoren beträgt typischerweise 2 bis 15 m, normalerweise 3 bis10 m. Das Volumen der katalytischen Schüttung pro Horde beträgt im Allgemeinen 10 bis 500 m³, üblicher Weise 20 bis 350 m³. Die Höhe der katalytischen Schüttung pro Horde beträgt im Allgemeinen 0,3 bis 3 m, typischer Weise 0,5 bis 2,5 m. Die Gasbelastung in Nm³/h, bezogen auf das Katalysatorvolumen in m³ (GHSV), beträgt im Allgemeinen 100 bis 5000 h⁻¹, üblicher Weise 500 bis 2500 h⁻¹. Die Strömung ist typischerweise im laminaren Bereich, die Reynoldszahl der Strömung in der Horde beträgt im Allgemeinen 10 bis 1000, typischer Weise 30 bis 500. Der Druckverlust über die Schüttung einer Horde beträgt im Allgemeinen 2 bis 100 mbar, typischerweise 5 bis 50 mbar.

Es ist von wirtschaftlichem Vorteil, wenn der Druckverlust über den Prozess, insbesondere über Reaktor, Wärmetauscher und gegebenenfalls Absorptionsturm, gering ist, um geringere Kosten für die Verdichtung des Reaktionsgases zu haben und um die Druckfestigkeitsanforderungen der Bauteile zu minimieren. Eine katalytische Schüttung, welche sich durch einen niedrigen Druckverlust und eine hohe Aktivität auszeichnet, ist hierbei vorteilhaft.

Abbildung 3 zeigt einen Vergleich von gemessenen (Kreise: Autrittsdruck 0 bar; Quadrate: Austrittsdruck 1 bar) und berechneten (gestrichelte Linien) Druckverlustdaten für zylindrische Formkörper.

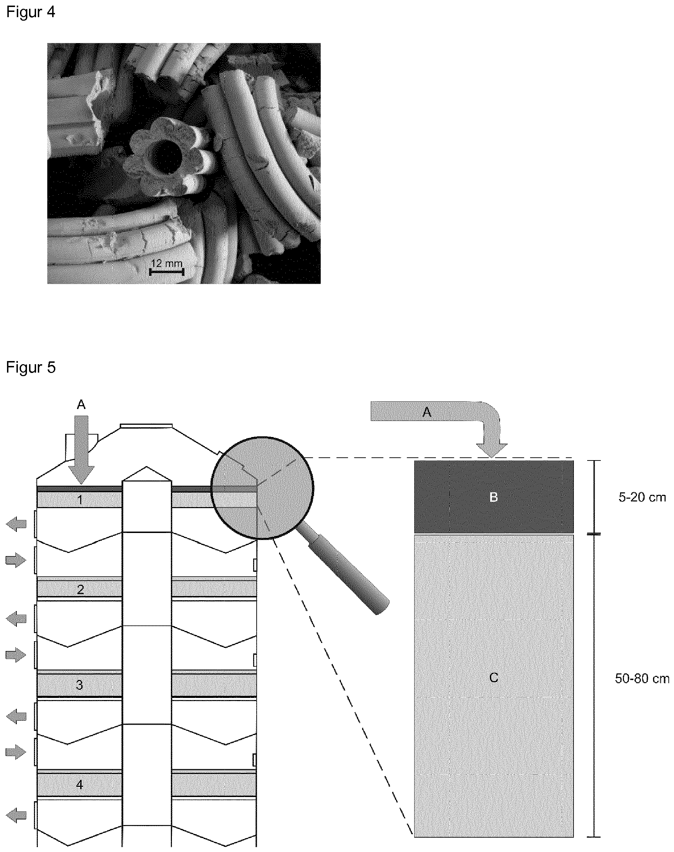

Abbildung 4 zeigt kalzinierte Katalysatoren mit einer zylindrischen Form mit 7 Auswölbungen und rundem Loch.

Abbildung 5 zeigt schematisch die Position der Staubschutzschicht im ersten Katalysatorbett des Reaktors mit eingezeichneter Strömungsrichtung. (A) Gaszufuhr; (B) Staubschutzschicht; (C) Standard Vanadium-Katalysator; (1), (2), (3), (4): Katalysatorbetten 1 bis 4.

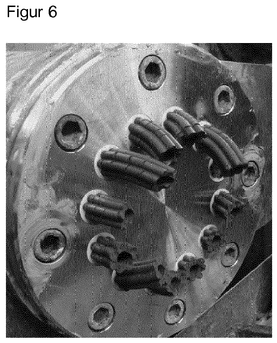

Abbildung 6 zeigt eine Matrizenplatte für die Extrusion.

Die Erfindung wird durch die nachstehenden Beispiele näher erläutert.

### Beispiele

In den Beispielen 1 und 2 wurde der Zusammenhang zwischen Druckverlust und Form bzw. Größe der Katalysatoren mittels einer numerischen Strömungssimulation berechnet, welche die Strömung in den Zwischenräumen der Katalysatorschüttung vollständig auflöst. Die Methode liefert sehr gute Übereinstimmungen mit experimentellen Daten, wie in Abbildung 3 für zylindrische Formkörper gezeigt. Das Vorgehen besteht aus drei aufeinander folgenden Schritten. Als erstes wird die Geometrie der Schüttung erstellt. Hierfür für ein CAD (Computer Aided Desgin) Model eines einzelnen Katalysator-Formkörpers mit einem beliebigen CAD Programm erstellt. Damit ist die Form des Katalysators (z.B. Zylinder, Ring, Blume, usw.) festgelegt. Als äußerer Container für die Schüttung wird ein Rohr mit einem für einen technischen Reaktor typischen Innendurchmesser verwendet. Sowohl die digitale Containergeometrie als auch die digitale Katalysatorgeometrie werden in ein anderes Simulationsprogramm geladen, dass es ermöglicht die Bewegung der Katalysatoren beim Einfüllen in den Container mit den Newtonschen Bewegungsgleichungen zu berechnen. Die Druckverlustberechnungen wurden mit Luft bei Umgebungstemperatur und verschiedenen Gasraumgeschwindigkeiten (GHSV, gas hourly space velocity) durchgeführt. Für die thermodynamischen und Transporteigenschaften des Gases wurden Literaturwerte für Luft bei konstantem Betriebsdruck von 1 bar und -temperatur von 20°C verwendet. Nachfolgend wird ein erfindungsgemäßes Beispiel mit einem Vergleichsbeispiel verglichen.

### Beispiel 1 (Vergleichsbeispiel):

Ring 18x15x7 mm (äußerer Durchmesser x Länge x innerer Durchmesser)
Geometrische Oberfläche der Schüttung: 680,9 m²/m³, Höhe der Schüttung: 318 mm
Druckverlust pro Meter: 239 Pa/m

### Beispiel 2 (erfindungsgemäß):

Zylinder mit 7 Auswölbungen 27x15x12 mm (äußerer Durchmesser x Länge x innerer Durchmesser)
Geometrische Oberfläche der Schüttung: 637,7 m²/m³, Höhe der Schüttung: 421 mm
Druckverlust pro Meter: 134 Pa/m

Das erfindungsgemäße Beispiel 2 zeigt bei einer nur etwa 6% kleineren geometrischen Oberfläche einen um etwa 44% geringeren Druckverlust.

### Beispiel 3: Herstellung eines erfindungsgemäßen Katalysators

Die in Tabelle 1 aufgezählten Einsatzstoffe wurden in einem Muller-Mischer vermischt und eine Paste hergestellt.

**Tabelle 1: Liste der Einsatzstoffe**

| Material | Materialmenge |
|---|---|
| | |
| Kalilauge 48 % | 8,78 L |
| Natronlauge 25 % | 3,64 L |
| Ammoniumpolyvanadat | 3,71 kg |
| Schwefelsäure 48 % | 15,8 L |
| VE-Wasser | 0,3 L |
| Kieselgur | 30,7 kg |
| Rückgut | 10 kg |
| Stärkelösung (8 % Stärke) | 3,71 L |

Anschließend wurde Katalysatorpaste zur Herstellung der Formkörper extrudiert. Die Extrusion fand bei einem Drehmoment von 400 bis 550 Nm und einer Drehzahl von 10 UPM mit einer Extrusionsplatte statt, die 12 einzelne Matrizen enthielt. Die Matrizen hatten die Form einer siebenblättrigen Blume mit einem Außendurchmesser von 27 mm und einem Innenloch mit einem Durchmesser von 12 mm (vgl. Beispiel 2). Die Matrize ist ein Abbildung 6 gezeigt. Nach der Extrusion wurden die Extrudate mit einem Standardschneidwerkzeug auf eine Länge von 30 mm +- 4 mm geschnitten.

Die Extrudate wurden bei 540°C für 3 h kalziniert, um den fertigen Katalysator zu erhalten (Abbildung 4). Der kalzinierte Katalysator hatte eine Schüttdichte von 2,321 kg/l, eine Porenfläche von 2,501 m²/g und einen mittleren Porendurchmesser von 0,6206 µm.

## Patentansprüche

1. Katalysator für die Oxidation von SO₂ zu SO₃, enthaltend Vanadium, mindestens ein Alkalimetall und Sulfat auf einem Siliziumdioxid-Trägermaterial, welcher eine ringförmige oder zylindrische Form mit mindestens drei Auswölbungen, einen Außendurchmesser von mindestens 26 mm, eine Länge im Bereich von 5 und 60 mm und ein Innenloch mit einem Durchmesser im Bereich von 8 bis 20 mm hat.

2. Katalysator gemäß Anspruch 1, wobei der Katalysator eine zylindrische Form mit mindestens 6 und höchsten 15 Auswölbungen.

3. Katalysator gemäß einem der Ansprüche 1 oder 2, wobei der Katalysator eine zylindrische Form mit 7 Auswölbungen hat.

4. Katalysator gemäß einem der Ansprüche 1 bis 3, wobei die Auswölbungen einen Masseanteil am Gesamtkatalysator im Bereich von 1 bis 80 % haben.

5. Katalysator gemäß einem der Ansprüche 1 bis 4, wobei das Verhältnis des Lochdurchmessers zum Außendurchmesser des Katalysators im Bereich von 0,3 und 0,8 liegt.

6. Verfahren zur Herstellung von Katalysatoren gemäß einem der Ansprüche 1 bis 5 durch Extrusion einer entsprechenden Katalysatorvorläufermasse, umfassend Vanadium, mindestens ein Alkalimetall und Sulfat auf einem Siliziumdioxid-Trägermaterial, durch ein Extrusionswerkzeug, welches die Geometrie des Katalysatorquerschnitts abbildet.

7. Verwendung der Katalysatoren gemäß einem der Ansprüche 1 bis 5 zur Oxidation von SO₂ zu SO₃.

8. Verwendung gemäß Anspruch 7, wobei der Katalysator als erste Katalysatorlage in der ersten Horde des Reaktors als Staubschutzschicht verwendet wird.

9. Verwendung gemäß Anspruch 8, wobei die Staubschutzschicht eine Höhe im Bereich von 5 bis 20 cm hat.

10. Verfahren zur Oxidation von SO₂ zu SO₃, bei dem ein Sauerstoff und Schwefeldioxid enthaltendes Gasgemisch bei einer Temperatur im Bereich von 340 bis 680 °C mit einer Schüttung aus Katalysatoren gemäß einem der Ansprüche 1 bis 5 in Kontakt gebracht wird.
